# EUROPEAN PATENT APPLICATION

(11) **EP 4 752 992 A1**
(43) Date of publication of application: **03.06.2026**
(21) Application number: 24852333.4
(22) Date of filing: 07.08.2024
(51) Int. Cl.: H01M 8/04119, B01D 63/04

(54) **MEMBRANE HUMIDIFIER FOR FUEL CELL INCLUDING HOLLOW FIBER MEMBRANE TWIST CARTRIDGE**

(30) Priority: 08.08.2023 KR 20230103626
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Vossius & Partner Patentanwälte Rechtsanwälte mbB
(86) International application number: PCT/KR2024/011694
(87) International publication number: WO 2025/033979

(57) **Abstract**

The present disclosure relates to a technology capable of actively controlling the humidification amount or humidification efficiency of a membrane humidifier for a fuel cell by including a cartridge capable of controlling the twist of a hollow fiber membrane, the membrane humidifier including a mid-case including a wet air inlet and a wet air outlet and a cartridge disposed inside, a first cap coupled to one side of the mid-case and including a dry air inlet, and a second cap coupled to the other side of the mid-case and including a dry air outlet, the cartridge including a first inner case, a second inner case connected to the first inner case, and a hollow fiber membrane disposed inside the first inner case and the second inner case, and having one side fixed to the first inner case and another side fixed to the second inner case, wherein the first inner case is rotatable with respect to the second inner case.

## Description

### Technical Field

The present disclosure relates to a membrane humidifier for a fuel cell. More particularly, the present disclosure relates to a membrane humidifier for a fuel cell that actively controls the humidification amount by controlling the twist of a hollow fiber membrane or a bundle of hollow fiber membranes.

### Background Art

A fuel cell is a power generation cell wherein hydrogen is combined with oxygen to generate electricity. Such a fuel cell has advantages in that it is possible to continuously generate electricity as long as hydrogen and oxygen are supplied thereto, unlike a general chemical cell, such as a dry cell or a storage cell, and in that there is no heat loss. Thus, the efficiency of the fuel cell is about twice as high as the efficiency of an internal combustion engine.

In addition, the fuel cell directly converts chemical energy generated by combination of hydrogen and oxygen into electrical energy, and thus, small volumes of pollutants are discharged. Consequently, the fuel cell has advantages in that it is environmentally friendly and concerns about depletion of resources due to an increase in energy consumption may be reduced.

Fuel cells may be classified based on the kind of an electrolyte that is used. Among fuel cells, a polymer electrolyte membrane fuel cell (PEMFC) is known as being the most favorable to a transportation system as well as small-scale stationary power generation equipment because the PEMFC operates at a lower temperature than the other fuel cells and the output density of the PEMFC is high, and thus, it is possible to miniaturize the PEMFC.

One of the most important factors to improve the performance of the PEMFC is to supply a certain amount or more of moisture to a polymer electrolyte membrane or a proton exchange membrane (PEM) of a membrane electrode assembly (MEA) in order to retain moisture content. The reason for this is that, in the case in which the PEM becomes dry, power generation efficiency is abruptly reduced.

As described above, the role of a humidifier that humidifies the PEM may be essential and highly important. Among these methods, a humidification membrane method of humidifying the PEM by using a membrane that selectively transmits only water vapor is advantageous in that it is possible to reduce the weight and size of the humidifier.

In particular, a selective permeable membrane used in the humidification membrane method is preferably a hollow fiber membrane having a large permeable area per unit volume when forming a module. That is, in the case in which a membrane humidifier is manufactured by using a hollow fiber membrane, high integration of the hollow fiber membranes having large contact surface area is possible, and thus, it is possible to sufficiently humidify a fuel cell even in the case of a small amount.

However, an excessive humidification amount also has problems. For example, when moisture is condensed and a flow path in a stack is blocked due to an excessive moisture supply during a low-power operation period of the stack, there may be a problem in that a part of the stack deteriorates.

Therefore, actively controlling the humidification amount in accordance with the operating state of a fuel cell may be a very major task in the field of membrane humidifiers for fuel cells.

### Disclosure of Invention

### Technical Problem

The present disclosure solves the above problems, and provides a membrane humidifier for a fuel cell, the membrane humidifier including a hollow fiber membrane twist cartridge and being capable of actively controlling the humidification amount according to the operating state of the fuel cell.

### Solution to Problem

A membrane humidifier for a fuel cell, which includes a hollow fiber membrane twist cartridge, according to an embodiment of the present disclosure to solve the above problems includes a mid-case including a wet air inlet, a wet air outlet, and a cartridge disposed inside, a first cap coupled to one side of the mid-case and including a dry air inlet, and a second cap coupled to the other side of the mid-case and including a dry air outlet, the cartridge includes a first inner case, a second inner case connected to the first inner case, and a hollow fiber membrane disposed inside the first inner case and the second inner case, and having one side fixed to the first inner case and the other side fixed to the second inner case, and the first inner case is rotatable with respect to the second inner case.

In an embodiment of the present disclosure, the second inner case may be fixed, and a twist of the hollow fiber membrane may be controlled according to a rotation of the first inner case.

In an embodiment of the present disclosure, the first inner case may rotate by wet air supplied inside of the mid-case through the wet air inlet.

In an embodiment of the present disclosure, a degree of rotation of the first inner case may be controlled according to the inflow intensity of wet air.

In an embodiment of the present disclosure, the first inner case may be located such that its outer circumferential surface faces the wet air inlet, and the second inner case may be located such that its outer circumferential surface faces the wet air outlet.

In an embodiment of the present disclosure, the first inner case may further include a turning blade on the outer circumferential surface thereof.

In an embodiment of the present disclosure, the turning blade may be connected to the mid-case through an elastic member.

In an embodiment of the present disclosure, the hollow fiber membrane may be provided such that a twist decreases as an inflow intensity of wet air increases, and the twist increases as the inflow intensity of wet air decreases.

In an embodiment of the present disclosure, a first window through which wet air is introduced may be provided in the outer circumferential surface of the first inner case, and a second window through which wet air is discharged may be provided in the outer circumferential surface of the second inner case.

In an embodiment of the present disclosure, the opening area by the first window may be larger than the opening area by the second window.

### Advantageous Effects of Invention

The present disclosure has the advantage of actively controlling the humidification amount of the membrane humidifier for the fuel cell such that humidification efficiency increases in a high-power period of the fuel cell and humidification efficiency decreases in a low-power period of the fuel cell according to the above-described configurations and coupling relationships.

### Brief Description of Drawings

FIG. 1 is a perspective view illustrating a membrane humidifier for a fuel cell according to an embodiment of the present disclosure.
FIG. 2 is a perspective view illustrating a cartridge in a membrane humidifier for a fuel cell according to an embodiment of the present disclosure.
FIG. 3 is a view illustrating a twist change of a hollow fiber membrane according to the output of a fuel cell in a membrane humidifier for a fuel cell according to an embodiment of the present disclosure.
FIG. 4 is a cross-sectional view taken along a line I-I' in FIG. 1 to show a comparative view illustrating control of the humidification amount according to the operating state of a fuel cell in a membrane humidifier for a fuel cell according to an embodiment of the present disclosure.

### Mode for the Invention

The disclosure will be described more fully hereinafter with reference to the accompanying drawings, in which embodiments according to the present disclosure are shown, and the principle of the present disclosure is described so that the embodiments may be practiced by one of ordinary skill in the art. The disclosed embodiments may be implemented in various forms.

Expressions such as "including" or "may include" that may be used in various embodiments of the present disclosure indicate the existence of a corresponding function, operation, component, etc. that are disclosed, and do not limit one or more additional functions, operations, components, etc. In addition, in various embodiments according to the present disclosure, terms such as "comprise" or "have" are intended to refer to the presence of features, numbers, steps, operations, components, parts, or combinations thereof described in the specification, but it should be understood that the terms do not preclude the existence or addition of one or more other features, numbers, steps, operations, components, parts, or combinations thereof.

When a component is "connected or coupled" to another component, it should be understood that the component may be directly connected or coupled to the other component, but there may also be new other components between the component and the other component. In addition, a component is "directly connected" or "directly coupled" to another component, it should be understood that no new component exists between the component and the other component.

The terms first, second, etc. used herein may be used to describe various components, but the components should not be limited by terms. The terms are used only for the purpose of distinguishing one component from other components.

Singular forms used herein are intended to include plural forms as well, unless the context clearly indicates otherwise. For example, a hollow fiber membrane used herein may be interpreted to include a plurality of hollow fiber membranes forming a bundle of hollow fiber membranes, except when it is explicitly expressed as singular.

Hereinafter, embodiments of the present disclosure are described in detail with reference to the accompanying drawings.

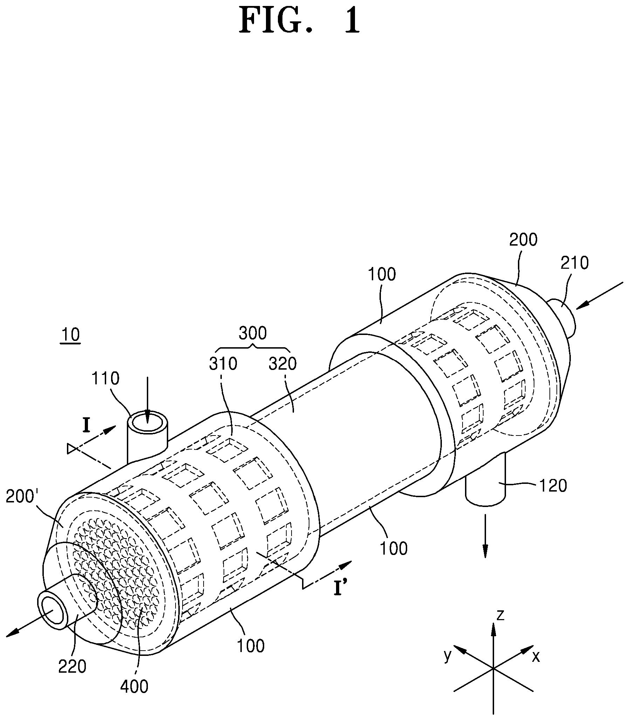

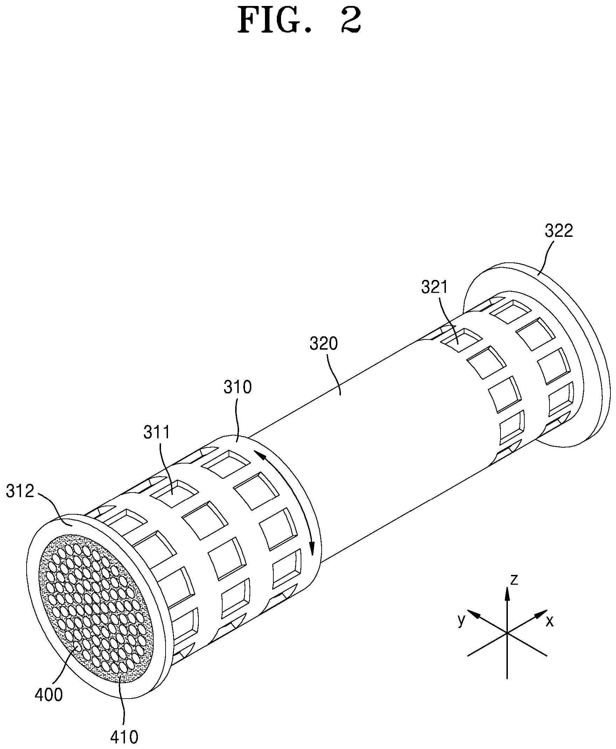

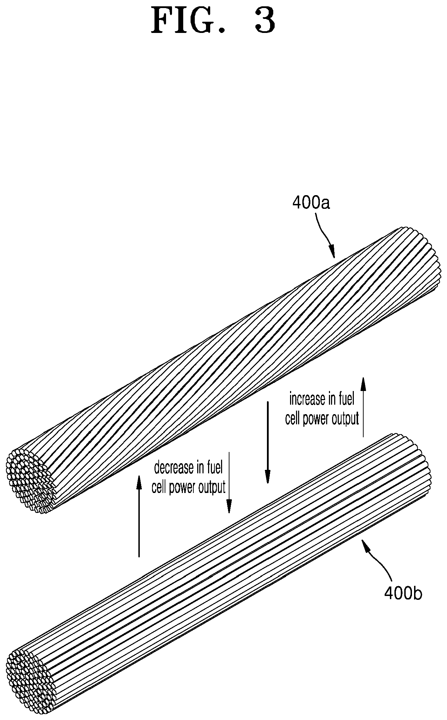

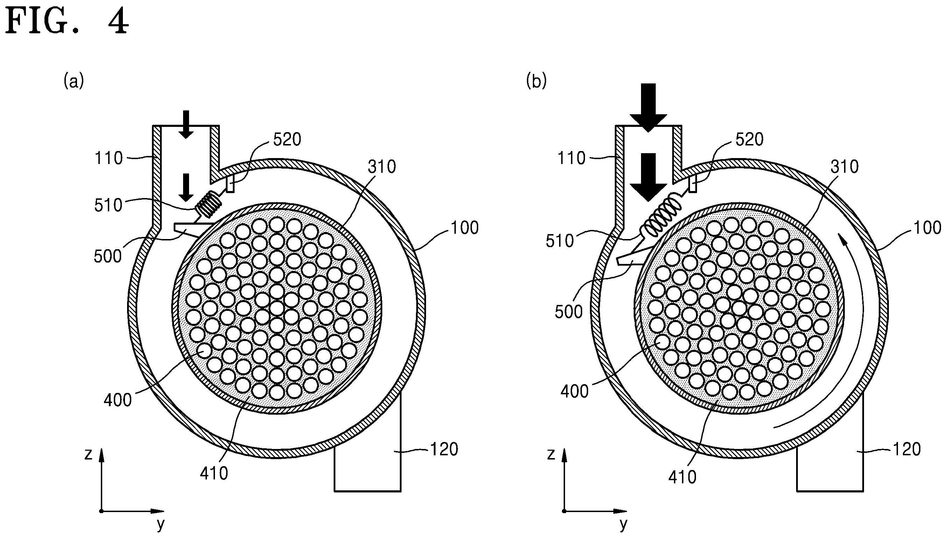

FIG. 1 is a perspective view illustrating a membrane humidifier for a fuel cell according to an embodiment of the present disclosure. FIG. 2 is a perspective view illustrating a cartridge in the membrane humidifier for a fuel cell according to an embodiment of the present disclosure. FIG. 3 is a view illustrating a twist change of a hollow fiber membrane according to the output of the fuel cell in the membrane humidifier for a fuel cell according to an embodiment of the present disclosure. FIG. 4 is a cross-sectional view taken along a line I-I' in FIG. 1 to show a comparative view illustrating control of the humidification amount according to the operating state of the fuel cell in a membrane humidifier 10 for a fuel cell according to an embodiment of the present disclosure.

Referring to FIG. 1, in an embodiment of the present disclosure, the membrane humidifier 10 for a fuel cell includes a hollow fiber membrane twist cartridge and further includes a mid-case 100, a first cap 200 and a second cap 200' located at both sides of the mid-case 100 to form the exterior of the membrane humidifier, and a cartridge 300 including a hollow fiber membrane 400 inside the mid-case 100.

A dry air inlet 210 through which dry air is introduced is provided in the first cap 200, and a dry air outlet 220 through which the dry air introduced through the dry air inlet 210 performs humidification and is discharged to a stack (not shown) of the fuel cell is provided in the second cap 200'.

A wet air inlet 110 through which wet air discharged from the stack of the fuel cell is introduced into the mid-case 100 and a wet air outlet 120 through which wet air that has performed humidification inside the mid-case 100 is discharged to the outside are provided in an outer circumferential surface of the mid-case 100.

Humidification is performed between the wet air introduced into the mid-case 100 and the dry air introduced from the outside and introduced into the hollow fiber membrane 400 in such a way that the wet air provides only moisture to the dry air through the hollow fiber membrane 400. The basic operation of the membrane humidifier 10 for the fuel cell is generally similar to that of the conventional one.

Referring to FIGS. 1 and 2, in the membrane humidifier 10 for the fuel cell according to an embodiment of the present disclosure, the cartridge 300 included in the mid-case 100 is provided such that a first inner case 310 and a second inner case 320 are connected to form the exterior of the cartridge 300, and the first inner case 310 is provided to be rotatable with respect to the second inner case 320.

In addition, the hollow fiber membrane 400 located inside the cartridge 300 has one side fixed to the first inner case 310 and the other side fixed to the second inner case 320, in which case the hollow fiber membrane 400 is twisted or a previously formed twist is released by the rotation of the first inner case 310, and thus, the twist of the hollow fiber membrane 400 is controlled by the rotation of the first inner case 310, and eventually the humidification amount or humidification efficiency is controlled.

Specifically, referring to FIG. 3, (because the hollow fiber membrane 400 herein is interpreted to include a plurality of hollow fiber membranes 400 forming a bundle of hollow fiber membranes 400, unless it is explicitly expressed as singular as described above), when the twist of the bundle of hollow fiber membranes 400 increases, gaps between the adjacent hollow fiber membranes 400 decrease, and accordingly, the effective surface area of the hollow fiber membrane 400 performing humidification with wet air decreases.

On the other hand, when the twist of the bundle of the hollow fiber membranes 400 is released due to the rotation of the first inner case 310, gaps between the adjacent hollow fiber membranes 400 increase, a flow path of wet air is provided, and the effective surface area of the hollow fiber membrane 400 performing humidification increases.

Therefore, the twist of the hollow fiber membrane 400 is controlled by the rotation of the first inner case 310, and the twist of the hollow fiber membrane 400 is controlled, and thus, the humidification amount or humidification efficiency of the membrane humidifier is controlled.

Next, each configuration of the membrane humidifier 10 for the fuel cell including the hollow fiber membrane 400 twist cartridge 300 according to an embodiment of the present disclosure will be described in detail with reference to FIGS. 1 to 4.

Referring to FIG. 1, the mid-case 100 constitutes the exterior of the membrane humidifier. As shown in FIG. 1, the mid-case 100 may be provided in a cylindrical shape, but is not limited thereto, and may be provided as a square pillar with an empty inside, a polyhedron with an empty inside, etc.

The wet air inlet 110 may be provided at one side of the mid-case 100 such that wet air is introduced into the mid-case 100 from the fuel cell stack (not shown). The wet air inlet 110 may be provided in the form of a tube penetrating the mid-case 100 on the outer circumferential surface of the mid-case 100.

The wet air outlet 120 may be provided on the other side of the mid-case 100 such that the introduced wet air may perform humidification on the hollow fiber membrane 400 and be discharged to the outside of the mid-case 100. The wet air outlet 120 may be provided in the form of a tube penetrating the mid-case 100 on the outer circumferential surface of the mid-case 100, and may be provided at a position spaced apart from the wet air inlet 110.

The first cap 200 may be coupled to one end of the mid-case 100. The first cap 200 is a space separated from the inside of the mid-case 100 and through which dry air flows, and may include the dry air inlet 210 to allow dry air to be introduced from the outside. The dry air inlet 210 may be provided in the form of a tube penetrating the first cap 200.

The second cap 200' may be coupled to the other end of the mid-case 100. Similar to the first cap 200, the second cap 200' is a space separated from the inside of the mid-case 100 and through which dry air flows, and may include the dry air outlet 220 to allow dry air introduced through the first cap 200 to pass through the hollow fiber membrane 400 and be discharged to the stack of the fuel cell. The dry air outlet 220 may be provided in the form of a tube penetrating the second cap 200'.

The cartridge 300 may be provided inside the mid-case 100. The cartridge 300 is a container or frame in which the hollow fiber membrane 400 is embedded, and is inserted into and mounted on the mid-case 100 in the unit of the cartridge 300 or is provided to perform a function separate from the mid-case 100 in the unit of the cartridge 300.

Referring to FIGS. 1 and 2, in an embodiment of the present disclosure, the cartridge 300 may include the first inner case 310 and the second inner case 320 which are connected to form the exterior of the cartridge 300.

The first inner case 310 and the second inner case 320 may each be provided in a cylindrical shape with both sides open. However, the present disclosure is not limited thereto.

One side of the first inner case 310 and one side of the second inner case 320 may be connected to each other, with respect to a connection, may include a packing member (not shown) to prevent wet air introduced into the cartridge 300 from leaking through a connection part between the first inner case 310 and the second inner case 320, and at the same time, may include a bearing member (not shown) to allow the first inner case 310 to be rotatable with respect to the second inner case 320.

The first inner case 310 and the second inner case 320 may be connected to the mid-case 100 and sealed through the packing member, so that wet air inside the mid-case 100 may not be introduced into the first cap 200 or the second cap 200', or dry air of the first cap 200 or the second cap 200' may not be introduced into the mid-case 100.

A first packing member 312 connecting the first inner case 310 to the mid-case 100 may further include a bearing member (not shown) for rotation of the first inner case 310. The bearing member may be provided as a ball-bearing, a roller-bearing, etc., and the present disclosure is not limited or restricted by the type or characteristics of a bearing.

For example, referring to FIG. 2, the first inner case 310 and the second inner case 320 are each provided in a cylindrical shape with both ends open, and the first inner case 310 is provided in the cylindrical shape with a diameter larger than that of the second inner case 320, so that one end of the second inner case 320 is inserted into and connected to the inside of one end of the first inner case 310. With respect to a connection, a bearing member is provided between an inner surface of the first inner case 310 and an outer surface of the second inner case 320 located at the connection part, so that the first inner case 310 may be rotatably connected to the second inner case 320. A typical ball-bearing, roller-bearing, etc. may be used as the bearing member, and the present disclosure is not limited or restricted by the type and characteristics of the bearing member.

In addition, the first packing member 312 including the bearing member is provided on an outer circumferential surface of the other end of the first inner case 310 (e.g., it may be understood as an end that is not connected to the second inner case 320 among both ends of the first inner case 310) to connect the mid case 100 to the first inner case 310, and the second packing member 322 is provided on an outer circumferential surface of the other end of the second inner case 320 (e.g., it may be understood as an end that is not connected to the first inner case 310 among both ends of the second inner case 320) to connect the second inner case 320 to the mid case 100.

Referring to FIGS. 2 and 3, the hollow fiber membrane 400 may be disposed inside the cartridge 300 in which the first inner case 310 and the second inner case 320 form the exterior of the cartridge 300. One end of the hollow fiber membrane 400 may be potted and fixed to an open end of the first inner case 310, and the other end of the hollow fiber membrane 400 may be potted and fixed to an open end of the second inner case 320. The present disclosure is not limited or restricted by a potting method or a potting material.

In an embodiment of the present disclosure, the second inner case 320 may be fixed to the mid-case 100 so as not to rotate. Accordingly, the hollow fiber membrane 400 having one end potted and fixed to the first inner case 310, and having the other end potted and fixed to the second inner case 320 is twisted according to the rotation of the first inner case 310.

According to the initial state of the hollow fiber membrane 400 and the rotation direction of the first inner case 310, the twist of the hollow fiber membrane 400 may increase or decrease.

For example, when the hollow fiber membranes 400 are disposed in parallel inside the cartridge 300 in the initial state, the rotation of the first inner case 310 causes a twist in the hollow fiber membrane 400. On the other hand, when the hollow fiber membrane 400 is twisted at a predetermined rotation angle in the initial state, the twist may further increase or decrease and be eliminated according to the rotation direction of the first inner case 310.

Referring to FIGS. 1 and 4, in an embodiment of the present disclosure, the first inner case 310 may be provided so that a degree of rotation is adjusted according to the intensity of inflow of wet air.

To this end, the first inner case 310 may be located such that the outer circumferential surface thereof faces the wet air inlet 110 of the mid-case 100, and the second inner case 320 may be located such that the outer circumferential surface thereof faces the wet air outlet 120 of the mid-case 100.

In addition, a turning blade 500 may be provided on the outer circumferential surface of the first inner case 310, and may face the wet air inlet 110 in the mid-case 100 and be pushed by the hydraulic pressure of the introduced wet air, and accordingly, enabling to rotate the first inner case 310 connected to the turning blade 500.

For example, referring to FIG. 4, the turning blade 500 may be provided in a shape including a plate on one side, and may be disposed on the outer circumferential surface of the first inner case 310 so that the plate vertically faces the introduced wet air. However, the present disclosure is not limited thereto, and it should be construed as belonging to the present disclosure as long as the turning blade 500 is provided in a shape and position capable of rotating the connected first inner case 310 by being pushed by the hydraulic pressure of wet air.

In addition, the turning blade 500 may be connected to the mid-case 100 through an elastic member 510, so that the rotation of the first inner case 310 may be limited to a predetermined range (e.g., it may be the elastic limit of the elastic member 510), and, when the hydraulic pressure of wet air is weaker than the elastic force of the elastic member 510, the turning blade 500 connected to the elastic member 510 may be pulled back to rotate the first inner case 310 to the initial state (e.g., it may be a state where the fuel cell has stopped operating; the same applies below).

At this time, the elastic member 510 may be provided as a spring, a rubber member, etc., and in some cases, the elastic member 510 may be indirectly connected to the mid-case 100 through a fixing member 520 provided in the mid-case 100. However, the present disclosure is not limited thereto.

Referring to FIGS. 3 and 4, in an embodiment of the present disclosure, the hollow fiber membrane 400 may be provided such that a twist decreases as the inflow intensity of wet air increases, and the twist increases as the inflow intensity of wet air decreases.

For example, the hollow fiber membrane 400 is disposed in a twisted state inside the cartridge 300 in an initial state where the fuel cell has stopped operating or has just started operating and the first inner case 310 is not rotating. The initial state is maintained by the elastic member 510 connecting the turning blade 500 to the mid-case 100 (400a of FIG. 3 and FIG. 4A).

Thereafter, when the hydraulic pressure of wet air introduced through the wet air inlet 110 is strong above the elastic force of the elastic member 510 due to the high-power operation of the fuel cell, the turning blade 500 is pushed, and accordingly, the first inner case 310 rotates to release the twist of the hollow fiber membrane 400 (400b of FIG. 3 and FIG. 4B).

When the twist of the hollow fiber membrane 400 is released, gaps between the single hollow fiber membranes 400 within the bundle of the hollow fiber membranes 400 increase, and the effective humidification area of the hollow fiber membrane 400 in contact with wet air increases, and thus, the humidification amount and humidification efficiency increase.

In addition, when the fuel cell switches from high-power operation to low-power operation, and the hydraulic pressure of wet air is weak below than the elastic force of the elastic member 510, the turning blade 500 is pulled back, and accordingly, the first inner case 310 rotates to cause the released hollow fiber membrane 400 to be twisted again (400a of FIG. 3 and FIG. 4A).

As the hollow fiber membrane 400 is twisted, gaps between the single hollow fiber membranes 400 within the bundle of the hollow fiber membranes 400 decrease, and the effective humidification area of the hollow fiber membrane 400 in contact with wet air decreases, and thus, the humidification amount and humidification efficiency decrease.

As described above, the membrane humidifier 10 for the fuel cell including the hollow fiber membrane 400 twist cartridge 300according to an embodiment of the present disclosure actively controls a degree of twist of the hollow fiber membrane 400 according to the operating state of the fuel cell or the hydraulic pressure of wet air introduced through the wet air inlet 110, which means that the humidification amount or humidification efficiency is actively controlled according to the operating state of the fuel cell.

Next, referring again to FIGS. 1 and 2, in an embodiment of the present disclosure, a first window 311 through which wet air may be introduced into the outer circumferential surface of the first inner case 310 may be provided in the cartridge 300, and a second window 321 through which wet air may be discharged may be provided in the second inner case 320.

The first window 311 and the second window 321 may be understood as holes provided in the outer circumferential surfaces of the first inner case 310 and the second inner case 320 so that wet air may be introduced into the cartridge 300.

Accordingly, the wet air introduced through the wet air inlet 110 may be introduced into the cartridge 300 through the first window 311 to perform humidification, and may be discharged from the cartridge 300 through the second window 321.

In an embodiment of the present disclosure, the opening area by the first window 311 may be provided to be larger than the opening area by the second window 321.

For example, as shown in FIG. 2, the first window 311 and the second window 321 may be provided as holes having the same predetermined area, and in this case, the number of first windows 311 provided in the outer circumferential surface of the first inner case 310 may be greater than the number of second windows 321 provided in the second inner case 320. However, the present disclosure is not limited thereto, and the first window 311 and the second window 321 may be provided in different sizes or shapes from each other.

When the opening area by the first window 311 is larger than the opening area by the second window 321, the flow rate of wet air introduced into the cartridge 300 is greater than the flow rate of wet air discharged, and the time for which wet air performs humidification inside the cartridge 300 increases, and thus, the overall humidification efficiency is improved.

The above description of the present disclosure is for illustration, and one of ordinary skill in the art to which the present disclosure pertains will understand that it can be easily transformed into other specific forms without changing the technical idea or essential features of the present disclosure. Therefore, it should be understood that the embodiments described above are illustrative in all respects and are not intended to be limited.

For example, the present disclosure has been described with reference to an embodiment illustrated in the drawing, but this is only exemplary, and one of ordinary skill in the art will understand that various modifications and modifications of the embodiments may be made therefrom.

Therefore, the scope of true technical protection of the present disclosure is represented by the technical idea of the claims described below, and all changes or modifications derived from the existing and scope of the claims and their equivalent concepts should be interpreted as being included in the scope of the present disclosure.

## Claims

1. A membrane humidifier for a fuel cell comprising a hollow fiber membrane twist cartridge, comprising:
a mid-case including a wet air inlet, a wet air outlet, and a cartridge disposed inside;
a first cap coupled to one side of the mid-case and including a dry air inlet; and
a second cap coupled to another side of the mid-case and including a dry air outlet,
wherein the cartridge includes
a first inner case;
a second inner case connected to the first inner case; and
a hollow fiber membrane disposed inside the first inner case and the second inner case and having one side fixed to the first inner case and another side fixed to the second inner case, and
the first inner case is rotatable with respect to the second inner case.

2. The membrane humidifier for the fuel cell of claim 1, wherein
the second inner case is fixed, and a twist of the hollow fiber membrane is controlled according to a rotation of the first inner case.

3. The membrane humidifier for the fuel cell of claim 1, wherein
the first inner case rotates by wet air supplied inside of the mid-case through the wet air inlet.

4. The membrane humidifier for the fuel cell of claim 1, wherein
a degree of rotation of the first inner case is controlled according to an inflow intensity of wet air.

5. The membrane humidifier for the fuel cell of claim 1, wherein
the first inner case is located such that its outer circumferential surface faces the wet air inlet, and
the second inner case is located such that its outer circumferential surface faces the wet air outlet.

6. The membrane humidifier for the fuel cell of claim 1, wherein
the first inner case further includes a turning blade on an outer circumferential surface thereof.

7. The membrane humidifier for the fuel cell of claim 6, wherein
the turning blade is connected to the mid-case through an elastic member.

8. The membrane humidifier for the fuel cell of claim 2, wherein
the hollow fiber membrane is provided such that a twist decreases as an inflow intensity of wet air increases, and the twist increases as the inflow intensity of the wet air decreases.

9. The membrane humidifier for the fuel cell of claim 1, wherein
a first window through which wet air is introduced is provided in an outer circumferential surface of the first inner case, and
a second window through which wet air is discharged is provided in an outer circumferential surface of the second inner case.

10. The membrane humidifier for the fuel cell of claim 9, wherein
an opening area by the first window is larger than an opening area by the second window.
